# EUROPÄISCHE PATENTSCHRIFT

(11) **EP 2 643 150 B1**
(45) Veröffentlichungstag und Bekanntmachung des Hinweises auf die Patenterteilung: **27.08.2014**
(21) Anmeldenummer: 11717932.5
(22) Anmeldetag: 22.03.2011
(51) Int. Cl.: B29C 70/44, B29C 33/00

(54) **VAKUUMHAUBEN-VORRICHTUNG**
VACUUM HOOD APPARATUS
DISPOSITIF DE COUVERCLE À VIDE

(30) Priorität: 11.02.2011 WO PCT/DE2011/000130
(43) Veröffentlichungstag der Anmeldung: 02.10.2013
(73) Patentinhaber: Piekenbrink Composite GmbH, 88471 Laupheim (DE)
(72) Erfinder: PIEKENBRINK, Björn, 88471 Laupheim (DE); PIEKENBRINK, Olaf, 88471 Laupheim (DE); ÜBERLE, Stefan, 88416 Steinhausen (DE)
(74) Vertreter: Kiessling, Christian
(86) Internationale Anmeldenummer: PCT/DE2011/000301
(87) Internationale Veröffentlichungsnummer: WO 2012/107007

(56) Entgegenhaltungen:
- EP-A2- 0 175 510
- WO-A1-00/71329
- US-A- 5 601 852

## Beschreibung

Die Erfindung betrifft eine Vakuumhauben-Vorrichtung mit einer aus einem elastischen Kunststoffmaterial hergestellten Vakuumhaube zum gasdichten Abdecken der Oberfläche eines mit der Unterfläche auf einen festen Formkörper aufgebrachten aushärtbaren Kompositsubstrats während eines mittels Gasdruck bewirkten Verpressens des Kompositsubstrats.

Vakuumhauben-Vorrichtungen der eingangs genannten Art finden Verwendung in dem Verfahren der Vakuumevakuierung, bei dem in einem Zustand der Formbarkeit befindliche Kunststoffmaterialien unter Druck in eine vorherbestimmte Form gebracht und dabei ausgehärtet werden.

Um den Erfolg des Vorgangs des Verpressens und Aushärtens sicherzustellen ist es wesentlich, dass eine Vakuumhaube während des Verpressens und Aushärtens eines aushärtbare Bindematerialien enthaltenden, drei-dimensional gebogenen Kompositsubstrats dieses Substrat nach außen gleichmäßig gasdicht umschließt, um das Substrat mittels eines auf die Vakuumhaube wirkenden Gases einem in alle Richtungen gleichmäßig stark wirkenden Gasdruck auszusetzen.

Bei einem herkömmlicherweise bekannten Verfahren der Vakuumevakuierung gemäß Stand der Technik wird ein Werkstück mittels Dichtungsfolie und Dichtschnur von der Umgebungsatmosphäre abgeschirmt (evakuiert) und anschließend unter Vakuum gesetzt. Ein Nachteil bei diesem Verfahren liegt darin, dass eine ausreichende Abdichtung zwischen Dichtungsfolie und Werkstück insbesondere in einem peripheren Bereich der Dichtungsfolie nur unter hohem Aufwand an Material und Zeit für eine ausreichende Abdichtungsarbeit erreicht wird, wobei eine exakte Anbringung einer Dichtungsfolienhaube an einem Formkörper insbesondere bei stark ausgeprägten konkav/konvexen Konturen des Formkörpers nicht immer möglich ist.

WO-A-00/71329 offenbart die Merkmale des Oberbegriffs des Anspruchs 1.

Bei einem verbesserten Verfahren der Vakuumevakuierung ist eine Vakuumhaube in einem peripheren Bereich mit einem einstückig mit der Vakuumhaube ausgebildeten Dichtungskeil versehen, der während eines Verpressens der Schicht aus aushärtbarem Kompositsubstrat in eine in einem peripheren Bereich des Formkörpers ausgebildete Dichtungsnut gasdicht eingreift. Obwohl dieses bekannte Verfahren zu sehr guten Ergebnissen führt sind seine Einsatzmöglichkeiten aufgrund der Notwendigkeit der Ausbildung einer Dichtungsnut nicht immer gegeben.

Aufgabe der Erfindung ist es deshalb, eine Vakuumhauben-Vorrichtung zu schaffen, die auch ohne Ausbildung einer Kombination von Dichtungskeil/Dichtungsnut geeignet ist, um während des Vorgangs des Verpressens und Aushärtens eines dauerhaft zu formenden Substrats eine gasdichte Umhüllung des Substrats zu bilden, um das Substrat mittels eines auf die Vakuumhaube wirkenden Gases einem in seiner Intensität vorgebbaren Gasdruck auszusetzen.

Für eine Vakuumhauben-Vorrichtung der eingangs genannten Art wird diese Aufgabe erfindungsgemäß dadurch gelöst, dass in einem peripheren Bereich der Vakuumhaube eine Umlaufnut ausgebildet ist, und mindestens eine Gaskommunikationsverbindung vorgesehen ist, mittels derer über eine Pumpeneinrichtung in der Umlaufnut ein Unterdruck erzeugbar ist.

Bevorzugte Ausführungsformen der Erfindung sind Gegenstand der Unteransprüche.

Bei der erfindungsgemäßen Vakuumhauben-Vorrichtung ist mittels der Merkmalskombination, dass in einem peripheren Bereich der Vakuumhaube eine Umlaufnut ausgebildet ist, und mindestens eine Gaskommunikationsverbindung vorgesehen ist, mittels derer über eine Pumpeneinrichtung in der Umlaufnut ein Unterdruck erzeugbar ist, sichergestellt, dass ein unter Normalbedingungen unter Atmosphärendruck stehender Raumbereich oberhalb einer Unterfläche des peripheren Bereiches der Vakuumhaube geschaffen ist, dessen nach unten an die Unterfläche angrenzenden Randbereiche bei Erzeugung eines Unterdrucks im Inneren der Umlaufnut mit entsprechendem Gegendruck gegen eine Auflagefläche der Vakuumhaube gedrückt werden, so dass die an die Unterfläche angrenzenden Randbereiche der Vakuumhaube gasdicht an die Auflagefläche angrenzen.

Die Umlaufnut ist vorzugsweise in sich geschlossen ausgebildet, um in allen Bereichen einheitliche Druckverhältnisse sicherzustellen. Dennoch sind Anwendungsfälle denkbar, bei denen die Umlaufnut in eine Mehrzahl von Segmenten unterteilt ist, beispielsweise um über eine Mehrzahl von Gaskommunikationsverbindungen zu einer Pumpeneinrichtung eine besonders schnelle und effektive Unterdruckerzeugung in der Umlaufnut sicherzustellen.

Die Umlaufnut ist vorzugsweise oberhalb einer Kommunikationsnut ausgebildet, deren oberes Ende in der Umlaufnut mündet und deren unteres Ende im Bereich der Unterfläche des peripheren Bereiches der Vakuumhaube mündet. Die Kommunikationsnut wirkt dabei insbesondere als Teil einer Gaskommunikationsverbindung zu einer Pumpeneinrichtung, deren der Vakuumhaube nahes Ende in einem Bereich unterhalb der Umlaufnut zu liegen kommt.

Gemäß einer alternativen Ausführungsform der erfindungsgemäßen Vorrichtung ist vorgesehen, dass ein der Vakuumhauben nahes Ende der Gaskommunikationsverbindung zu einer Pumpeneinrichtung als rohrartige Hohlleitung ausgebildet ist, die gasdicht von oben durch die Oberfläche des peripheren Bereiches der Vakuumhaube hindurch in die Umlaufnut mündend geführt ist.

Das Volumen der Umlaufnut kann etwa dem 3-fachen bis 30-fachen des Volumens der Kommunikationsnut entsprechen.

Im Bereich der Unterfläche des peripheren Bereichs der Vakuumhaube ist gemäß vorliegenden Erfindung beidseitig der Umlaufnut jeweils ein Umlaufkeil ausgebildet derart, dass bei Ablage der Vakuumhaube auf eine im Wesentlichen plane Oberfläche zwischen beiden Umlaufkeilen ein geschlossener Raumbereich geschaffen ist. Die Umlaufkeile sind dabei in der Regel im Wesentlichen parallel zueinander verlaufend angeordnet sind.

Gemäß einer alternativen Ausführungsform der erfindungsgemäßen Vorrichtung ist dabei vorgesehen, dass das Volumen der Umlaufnut deutlich größer als der zwischen den Umlaufkeilen eingeschlossene Raumbereich bemessen ist. Dadurch wird erreicht, dass durch kleinste Leckagen bedingter Abbau des Unterdrucks in dem zwischen den Umlaufkeilen eingeschlossenen Raumbereich sich verhältnismäßig entsprechend gering auswirkt, dass ein entsprechender Unterdruckrückgang durch Wirkung des in der Umlaufnut ausgebildeten Unterdruckes entsprechend deutlich ausgeglichen wird. Vorzugsweise entspricht das Volumen der Umlaufnut daher dem 2-fachen bis 10-fachen des zwischen den Umlaufkeilen eingeschlossenen Raumbereiches.

Des Weiteren kann im Bereich der Unterfläche des peripheren Bereichs der Vakuumhaube beidseitig der Umlaufnut und zwischen den Umlaufkeilen jeweils ein Umlaufkamm ausgebildet sein, wobei die Höhe der beiden vorzugsweise ebenfalls parallel verlaufend ausgebildeten Umlaufkämme regelmäßig geringer bemessen ist als die Höhe der Umlaufkeile, um die a priori Ausbildung eines zwischen den Umlaufkeilen eingeschlossenen Raumbereiches nicht zu unterbinden. Die Umlaufkämme wirken dabei in entsprechender Weise wie die Umlaufkeile und unterstützen und verstärken deren Wirkung.

Die Umlaufnut ist vorzugsweise hohlzylinderförmig ausgebildet, wobei gemäß einer wichtigen bevorzugten Ausführungsform der vorliegenden Erfindung innerhalb der Umlaufnut eine Stützeinrichtung vorgesehen ist, die eine Formstabilität der Umlaufnut auch bei Aufbringen eines erhöhten Gasdruckes auf die Oberfläche des peripheren Bereiches der Vakuumhaube sicherstellt. Die Stützeinrichtung kann beispielsweise von einer helikal ausgebildeten Metallspirale gebildet sein, oder sie kann beispielsweise von einem mittels ineinandergreifender Ringsegmente biegbar ausgebildeten Schlauch gebildet sein.

Gemäß einer weiteren Ausführungsform der erfindungsgemäßen Vorrichtung ist vorgesehen, dass eine Oberfläche des peripheren Bereiches der Vakuumhaube dachförmig im Querschnitt ein gleichschenkliges Dreieck bildend ausgebildet ist, wobei die Umlaufnut in einem Raumbereich unterhalb eines Dachgiebels angeordnet ist. Dadurch ist eine sichere Einbettung der Umlaufnut in den peripheren Bereich der Vakuumhaube sichergestellt.

Die erfindungsgemäße Vorrichtung wird im Folgenden anhand einer bevorzugten Ausführungsform erläutert, die in den Figuren der Zeichnung dargestellt ist. Darin zeigen:
- Fig. 1: eine bevorzugte Ausführungsform der erfindungsgemäßen Vorrichtung in einer Seitenansicht;
- Fig. 2: in Fig. 1 dargestellte bevorzugte Ausführungsform der erfindungsgemäßen Vorrichtung in einer Querschnittsansicht.

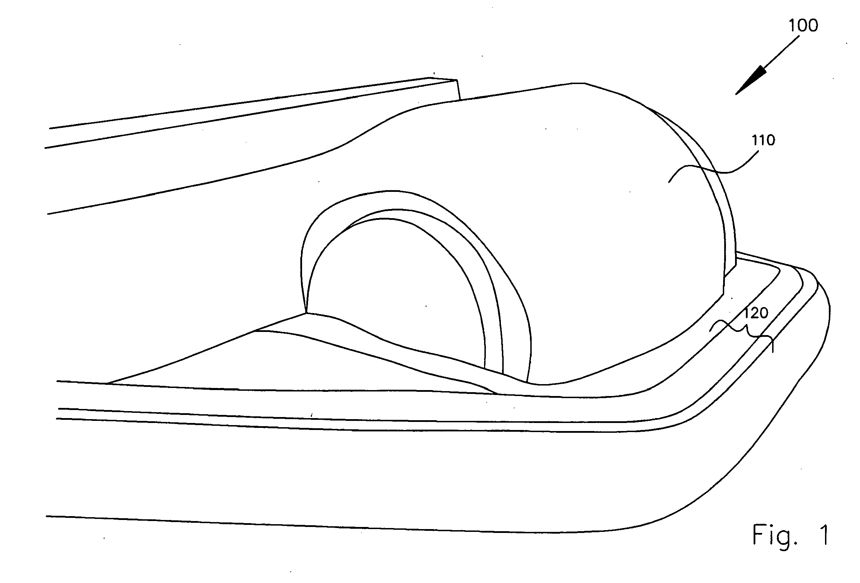

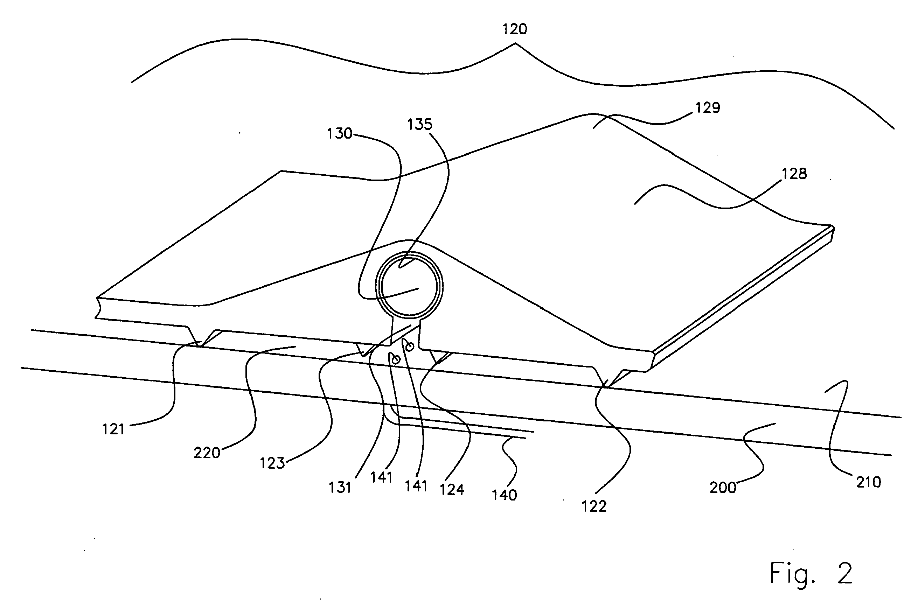

Die in den Figuren 1 und 2 dargestellte erfindungsgemäße Vakuumhauben-Vorrichtung (100) enthält eine aus einem elastischen Kunststoffmaterial hergestellte Vakuumhaube (110) zum gasdichten Abdecken der Oberfläche (210) eines mit der Unterfläche auf einen festen Formkörper aufgebrachten aushärtbaren Kompositsubstrats. (200) während eines mittels Gasdruck bewirkten Verpressens des Kompositsubstrats (200).

In einem peripheren Bereich (120) der Vakuumhaube (110) ist dabei eine in sich geschlossene Umlaufnut (130) ausgebildet, und es ist mindestens eine Gaskommunikationsverbindung (140, 141)) vorgesehen, mittels derer über eine nicht dargestellte Pumpeneinrichtung in der Umlaufnut (130) ein Unterdruck erzeugbar ist. Die Umlaufnut (130) ist oberhalb einer Kommunikationsnut (131) ausgebildet, deren oberes Ende in der Umlaufnut (130) mündet und deren unteres Ende im Bereich der Unterfläche (125) des peripheren Bereiches (120) der Vakuumhaube (110) mündet.

Die Umlaufnut (130) ist hohlzylinderförmig ausgebildet, wobei innerhalb der Umlaufnut (130) eine Stützeinrichtung (135) vorgesehen ist, die eine Formstabilität der Umlaufnut (130) auch bei Aufbringen eines erhöhten Gasdruckes auf die Oberfläche (128) des peripheren Bereiches (120) der Vakuumhaube (110) sicherstellt. Die Stützeinrichtung (135) ist dabei von einem mittels ineinandergreifender Ringsegmente biegbar ausgebildeten Schlauch gebildet.

Die Kommunikationsnut (131) wirkt als Teil einer Gaskommunikationsverbindung (140, 141) zu einer Pumpeneinrichtung, deren der Vakuumhaube (110) nahes Ende in einem Bereich unterhalb der Umlaufnut (130) zu liegen kommt. Das Volumen der Umlaufnut (130) entspricht etwa dem 10-fachen des Volumens der Kommunikationsnut (131).

Im Bereich der Unterfläche (125) des peripheren Bereichs (120) der Vakuumhaube (110) ist beidseitig der Umlaufnut (130) jeweils ein Umlaufkeil (121, 122) ausgebildet derart, dass bei Ablage der Vakuumhaube (110) auf eine im Wesentlichen plane Oberfläche (210) zwischen beiden im Wesentlichen parallel zueinander verlaufend angeordneten Umlaufkeilen (121, 122) ein geschlossener Raumbereich (220) geschaffen ist. Das Volumen der Umlaufnut (130) entspricht etwa dem 5-fachen des zwischen den Umlaufkeilen (121, 122) eingeschlossenen Raumbereiches (220).

Im Bereich der Unterfläche (125) des peripheren Bereichs (120) der Vakuumhaube (110) ist des Weiteren beidseitig der Umlaufnut (130) und zwischen den Umlaufkeilen (121, 122) jeweils ein Umlaufkamm (123, 124) ausgebildet, wobei die Höhe der Umlaufkämme (123, 124) geringer bemessen ist als die Höhe der Umlaufkeile (121, 122).

Eine Oberfläche (128) des peripheren Bereiches (120) der Vakuumhaube (120) ist im Querschnitt ein Dreieck bildend dachförmig ausgebildet, wobei die Umlaufnut (130) in einem Raumbereich unterhalb eines Dachgiebels (129) angeordnet ist.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Vakuumhauben-Vorrichtung (100) mit einer aus einem elastischen Kunststoffmaterial hergestellten Vakuumhaube (110) zum gasdichten Abdecken der Oberfläche (210) eines mit der Unterfläche (125) auf einen festen Formkörper aufgebrachten aushärtbaren Kompositsubstrats (200) während eines mittels Gasdruck bewirkten Verpressens des Kompositsubstrats (200), wobei in einem peripheren Bereich (120) der Vakuumhaube (110) eine Umlaufnut (130) ausgebildet ist, und mindestens eine Gaskommunikationsverbindung (140, 141) vorgesehen ist, mittels derer über eine Pumpeneinrichtung in der Umlaufnut (130) ein Unterdruck erzeugbar ist, **dadurch gekennzeichnet, dass** im Bereich der Unterfläche (125) des peripheren Bereichs (120) der Vakuumhaube (110) beidseitig der Umlaufnut (130) jeweils ein Umlaufkeil (121, 122) ausgebildet ist derart, dass bei Ablage der Vakuumhaube (110) auf eine im Wesentlichen plane Oberfläche (210) zwischen beiden Umlaufkeilen (121, 122) ein geschlossener Raumbereich (220) geschaffen ist, wobei im Bereich der Unterfläche (125) des peripheren Bereichs (120) der Vakuumhaube (110) beidseitig der Umlaufnut (130) und zwischen den Umlaufkeilen (121, 122) jeweils ein Umlaufkamm (123, 124) ausgebildet ist.

2. Vorrichtung nach Anspruch 1, **dadurch gekennzeichnet, dass** die Umlaufnut (130) in sich geschlossen ist.

3. Vorrichtung nach Anspruch 1, **dadurch gekennzeichnet, dass** die Umlaufnut (130) in eine Mehrzahl von Segmenten unterteilt ist.

4. Vorrichtung nach einem der vorhergehenden Ansprüche, **dadurch gekennzeichnet, dass** die Umlaufnut (130) oberhalb einer Kommunikationsnut (131) ausgebildet ist, deren oberes Ende in der Umlaufnut (130) mündet und deren unteres Ende im Bereich der Unterfläche (125) des peripheren Bereiches (120) der Vakuumhaube (110) mündet.

5. Vorrichtung nach einem der vorhergehenden Ansprüche, **dadurch gekennzeichnet, dass** die Kommunikationsnut (131) als Teil einer Gaskommunikationsverbindung (140, 141) zu einer Pumpeneinrichtung wirkt, deren der Vakuumhaube (110) nahes Ende in einem Bereich unterhalb der Umlaufnut (130) zu liegen kommt.

6. Vorrichtung nach einem der vorhergehenden Ansprüche, **dadurch gekennzeichnet, dass** ein der Vakuumhaube (110) nahes Ende der Gaskommunikationsverbindung (140, 141) zu einer Pumpeneinrichtung als rohrartige Hohlleitung ausgebildet ist, die gasdicht von oben durch die Oberfläche (128) des peripheren Bereiches (120) der Vakuumhaube (110) hindurch in die Umlaufnut (130) mündend geführt ist.

7. Vorrichtung nach Anspruch 4, **dadurch gekennzeichnet, dass** das Volumen der Umlaufnut (130) dem 3-fachen bis 30-fachen des Volumens der Kommunikationsnut (131) entspricht.

8. Vorrichtung nach Anspruch 1, **dadurch gekennzeichnet, dass** die Umlaufkeile (121, 122) im Wesentlichen parallel zueinander verlaufend angeordnet sind.

9. Vorrichtung nach einem der Ansprüche 1 oder 8, **dadurch gekennzeichnet, dass** das Volumen der Umlaufnut (130) dem 2-fachen bis 10-fachen des zwischen den Umlaufkeilen (121, 122) eingeschlossenen Raumbereiches (220) entspricht.

10. Vorrichtung nach Anspruch 1, **dadurch gekennzeichnet, dass** die Höhe der Umlaufkämme (123, 124) geringer bemessen ist als die Höhe der Umlaufkeile (121, 122).

11. Vorrichtung nach einem der vorhergehenden Ansprüche, **dadurch gekennzeichnet, dass** die Umlaufnut (130) hohlzylinderförmig ausgebildet ist.

12. Vorrichtung nach einem der vorhergehenden Ansprüche, **dadurch gekennzeichnet, dass** innerhalb der Umlaufnut (130) eine gasdurchlässige Stützeinrichtung (135) vorgesehen ist, die eine Formstabilität der Umlaufnut (130) auch bei Aufbringen eines erhöhten Gasdruckes auf die Oberfläche (128) des peripheren Bereiches (120) der Vakuumhaube (110) sicherstellt.

13. Vorrichtung nach Anspruch 12, **dadurch gekennzeichnet, dass** die Stützeinrichtung (135) von einer helikal ausgebildeten Metallspirale gebildet ist.

14. Vorrichtung nach Anspruch 12, **dadurch gekennzeichnet, dass** die Stützeinrichtung (135) von einem mittels ineinandergreifender Ringsegmente biegbar ausgebildeten Schlauch gebildet ist.

15. Vorrichtung nach einem der vorhergehenden Ansprüche, **dadurch gekennzeichnet, dass** eine Oberfläche des peripheren Bereiches (120) der Vakuumhaube (110) dachförmig im Querschnitt ein Dreieck bildend ausgebildet ist, wobei die Umlaufnut (130) in einem Raumbereich unterhalb eines Dachgiebels (129) angeordnet ist.

## Claims

1. A vacuum bag device (100) comprising a vacuum bag (110) manufactured from elastic plastics material for the provision of a gas-tight cover on the top surface (210) of a curable composite substrate (200), of which the sub-surface is pressed against a solid shaped body by means of gas pressure, in which a peripheral region (120) of said vacuum bag (110) has a self-contained circumferential groove (130), and at least one gas communication connection (140, 141) is provided, by means of which pumping equipment can create negative pressure within said circumferential groove (130), **characterized in that** in the region of said circumferential groove (130) on the sub-surface (125) of the peripheral region (120) of said vacuum bag (110), a circumferential wedge (121, 122) is designed such that when the vacuum bag is placed on a substantially flat surface (210), a closed space (220) is created between the two circumferential wedges (121, 122) running substantially parallel to each other.

2. The device as claimed in claim 1, **characterized in that** said circumferential groove (130) is self-contained.

3. The device as claimed in claim 1, **characterized in that** said circumferential groove (130) is divided into a plurality of segments.

4. The device as claimed in any one of the previous claims, **characterized in that** said circumferential groove (130) opens above a communication groove (131), the upper end of which opens into the circumferential groove (130) while its lower end opens into the region of the sub-surface (125) of the peripheral region (120) of the vacuum bag (110).

5. The device as claimed in any one of the previous claims, **characterized in that** said communication groove (131) functions as part of a gas communication connection (140, 141) to pumping equipment, where the end of said pumping equipment that is nearest to said vacuum bag (110) comes to lie underneath said circumferential groove (130).

6. The device as claimed in any one of the previous claims, **characterized in that** that end of the gas communication connection (140, 141) to a pumping device that is close to said vacuum hood (110) is in the form of a tubular hollow pipe which passes downwardly in a gas-tight manner through the surface (128) of the peripheral region (120) of said vacuum hood (110) to enter said peripheral groove (130).

7. The device as claimed in claim 4, **characterized in that** the volume of said circumferential groove (130) is from three to thirty times that of the communication groove (131).

8. The device as claimed in claim 4, **characterized in that** said circumferential wedges (121, 122) are disposed so as to extend substantially parallel to each other.

9. The device as claimed in any one of claims 1 and 8, **characterized in that** the volume in said circumferential groove (130) is from two to ten times that of the space (220) between said circumferential wedges (121, 122).

10. The device as claimed in claim 1, **characterized in that** the height of the circumferential ridges (123, 124) is less than that of the circumferential wedges (121, 122).

11. The device as claimed in any one of the previous claims, **characterized in that** said circumferential groove (130) is in the form of a hollow cylinder.

12. The device as claimed in any one of the previous claims, **characterized in that** a supporting unit (135) is provided within said circumferential groove (130), ensuring stability of shape of said circumferential groove (130) even when an increased gas pressure is applied to the top surface (128) of the peripheral region (120) of said vacuum bag (110).

13. The device as claimed in claim 12, **characterized in that** said supporting unit (135) is formed by a helically shaped metal spiral.

14. The device as claimed in claim 12, **characterized in that** the supporting unit (135) is constructed from a flexible hose constructed from interlocking ring segments.

15. The device as claimed in any one of the previous claims, **characterized in that** a top surface (128) of the peripheral region (120) of the vacuum bag (110) is designed in a roof-like manner, such that it forms a triangle in cross-section, where said circumferential groove (130) is disposed in a space beneath the apex (129).

## Revendications

1. Dispositif de couvercle à vide (100) comportant un couvercle à vide (110) fabriqué à partir d'un matériau en matière plastique élastique destiné au recouvrement étanche au gaz de la surface (210) d'un substrat composite (200) durcissable appliqué avec sa surface inférieure (125) sur un corps moulé solide pendant une compression du substrat composite (200) réalisée par application d'une pression de gaz, une rainure circonférentielle (130) étant réalisée dans une zone périphérique (120) du couvercle à vide (110), et au moins une liaison de communication de gaz (140, 141) étant prévue, moyennant laquelle une dépression peut être générée par l'intermédiaire d'un équipement de pompage dans la rainure circonférentielle (130), **caractérisé en ce que**, dans la zone de la surface inférieure (125) de la zone périphérique (120) du couvercle à vide (110), des deux côtés de la rainure circonférentielle (130), respectivement un coin circonférentiel (121, 122) est réalisé de telle manière que, quand le couvercle à vide (110) est placé sur une surface (210) sensiblement plane entre les deux coins circonférentiels (121, 122), on obtient une zone d'espace (220) close, respectivement un peigne circonférentiel (123, 124) étant réalisé dans la zone de la surface inférieure (125) de la zone périphérique (120) du couvercle à vide (110) des deux côtés de la rainure circonférentielle (130) et entre les coins circonférentiels (121, 122).

2. Dispositif selon la revendication 1, **caractérisé en ce que** la rainure circonférentielle (130) est fermée sur elle-même.

3. Dispositif selon la revendication 1, **caractérisé en ce que** la rainure circonférentielle (130) est subdivisée en une pluralité de segments.

4. Dispositif selon une des revendications précédentes, **caractérisé en ce que** la rainure circonférentielle (130) est réalisée au-dessus d'une rainure de communication (131) dont l'extrémité supérieure aboutit dans la rainure circonférentielle (130) et dont l'extrémité inférieure aboutit dans la zone de la surface inférieure (125) de la zone périphérique (120) du couvercle à vide (110).

5. Dispositif selon une des revendications précédentes, **caractérisé en ce que** la rainure de communication (131) agit en tant que partie d'une liaison de communication de gaz (140, 141) avec un équipement de pompage, dont l'extrémité proche du couvercle à vide (110) est disposée dans une zone située en-dessous de la rainure circonférentielle (130).

6. Dispositif selon une des revendications précédentes, **caractérisé en ce qu'**une extrémité proche du couvercle à vide (110) de la liaison de communication de gaz (140, 141) avec un équipement de pompage est réalisée en tant que conduit creux tubulaire qui est amené de manière étanche au gaz à partir d'en haut à travers la surface (128) de la zone périphérique (120) du couvercle à vide (110) de manière à aboutir dans la rainure circonférentielle (130).

7. Dispositif selon la revendication 4, **caractérisé en ce que** le volume de la rainure circonférentielle (130) correspond environ à entre 3 et 30 fois le volume de la rainure de communication (131).

8. Dispositif selon la revendication 1, **caractérisé en ce que** les coins circonférentiels (121, 122) sont agencés de manière sensiblement parallèle entre eux.

9. Dispositif selon une des revendications 1 ou 8, **caractérisé en ce que** le volume de la rainure circonférentielle (130) correspond à 2 à 10 fois la zone d'espace (220) comprise entre les coins circonférentiels (121, 122).

10. Dispositif selon la revendication 1, **caractérisé en ce que** la hauteur des peignes circonférentiels (123, 124) est plus faiblement dimensionnée que la hauteur des coins circonférentiels (121, 122).

11. Dispositif selon une des revendications précédentes, **caractérisé en ce que** la rainure circonférentielle (130) est réalisée en forme de cylindre creux.

12. Dispositif selon une des revendications précédentes, **caractérisé en ce que**, à l'intérieur de la rainure circonférentielle (130), un équipement de soutien (135) perméable au gaz est prévu, lequel assure une stabilité de forme de la rainure circonférentielle (130) même quand une pression de gaz élevée est appliquée sur la surface (128) de la zone périphérique (120) du couvercle à vide (110).

13. Dispositif selon la revendication 12, **caractérisé en ce que** l'équipement de soutien (135) consiste en une spirale métallique hélicoïdale.

14. Dispositif selon la revendication 12, **caractérisé en ce que** l'équipement de soutien (135) consiste en un tuyau flexible formé par des segments annulaires s'engrenant les uns dans les autres.

15. Dispositif selon une des revendications précédentes, **caractérisé en ce qu'**une surface de la zone périphérique (120) du couvercle à vide (110) est réalisée en forme de toit dont la section représente un triangle, la rainure circonférentielle (130) étant agencée dans une zone d'espace située en-dessous d'un pignon de toit (129).
